(19) Europäisches Patentamt
European Patent Office
Office européen des brevets

(11) EP 2 223 483 B1

(12) **EUROPEAN PATENT SPECIFICATION**

(45) Date of publication and mention
of the grant of the patent:
**07.02.2018 Bulletin 2018/06**

(21) Application number: **08860858.3**

(22) Date of filing: **12.12.2008**

(51) Int Cl.:
**H04L 25/03** (2006.01)   **H04L 25/02** (2006.01)

(86) International application number:
**PCT/EP2008/010594**

(87) International publication number:
**WO 2009/077135 (25.06.2009 Gazette 2009/26)**

(54) **BLIND TURBO CHANNEL ESTIMATION**

BLIND-TURBO-KANALSCHÄTZUNG

PROCÉDÉ ET ÉMETTEUR-RÉCEPTEUR UTILISANT UNE ESTIMATION AVEUGLE DE CANAL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **14.12.2007 EP 07024345
15.01.2008 EP 08000644
15.01.2008 EP 08000707**

(43) Date of publication of application:
**01.09.2010 Bulletin 2010/35**

(73) Proprietor: **Vodafone Holding GmbH
40213 Düsseldorf (DE)**

(72) Inventors:
• **RAVE, Wolfgang
01705 Freital-Pesterwitz (DE)**
• **FONSECA DOS SANTOS, André
70197 Stuttgart (DE)**
• **FETTWEIS, Gerhard
01326 Dresden (DE)**

(74) Representative: **KNH Patentanwälte
Kahlhöfer Neumann Rößler Heine
PartG mbB
Postfach 10 33 63
40024 Düsseldorf (DE)**

(56) References cited:
• SCHERB A ET AL: "On phase correct blind deconvolution of flat MIMO channels exploiting channel encoding" IEEE INTERNATIONAL CONFERENCE ON ACOUSTICS, SPEECH, AND SIGNAL PROCESSING, vol. 3, 23 March 2005 (2005-03-23), pages III-1045-III-1048, XP002536153 IEEE Piscataway, NJ, USA ISBN: 0-7803-8874-7
• SCHERB A ET AL: "On phase correct blind deconvolution exploiting channel coding" SIGNAL PROCESSING AND INFORMATION TECHNOLOGY, 14 December 2003 (2003-12-14), - 17 December 2004 (2004-12-17) pages 3518-521, XP010729206 IEEE, PISCATAWAY, NJ, USA ISBN: 978-0-7803-8292-3
• TEE R Y S ET AL: "Joint Design of Twin-Antenna Assisted Space-Time Multilevel Sphere Packing Aided Coded Modulation" VEHICULAR TECHNOLOGY CONFERENCE, 1 September 2006 (2006-09-01), pages 1-5, XP031051087 IEEE, PI ISBN: 978-1-4244-0062-1
• KANSANEN K ET AL: "Frequency-Domain MMSE Turbo Equalization of Multilevel Coded QAM - Convergencel in Real Fields" PERSONAL, INDOOR AND MOBILE RADIO COMMUNICATIONS, vol. 2, 11 September 2005 (2005-09-11), - 14 September 2005 (2005-09-14) pages 1019-1023, XP010926407 IEEE, PISCATAWAY, NJ, USA ISBN: 978-978-38007-2-4
• MEI CHEN ET AL: "Multilevel Coding for Nonlinear ISI Channels" INFORMATION THEORY, 1 July 2006 (2006-07-01), pages 615-619, XP031032283 IEEE, PI ISBN: 978-1-4244-0505-3

EP 2 223 483 B1

- DOS SANTOS A F ET AL: "Blind turbo multipath channel estimation of PAM signals exploiting multilevel codes" INFORMATION THEORY WORKSHOP, 2008. ITW '08. IEEE, IEEE, PISCATAWAY, NJ, USA, 5 May 2008 (2008-05-05), pages 353-357, XP031291415 ISBN: 978-1-4244-2269-2

**Description**

The invention relates to a transceiver and a corresponding method for use in a communication system for estimating the channel impulse response. In particular a turbo equalizer is disclosed for blind channel estimation.

Digital information can be transmitted via a channel from a transmitter to a receiver. As the sender and receiver circuits in many cases are closely related and integrated in a single embodiment the combination of a transmitter and a receiver is called a transceiver. A local transceiver accordingly may implement the function for encoding digital information to an electrical signal and for transmitting the signal to a remote transceiver via a transmission channel. Vice versa the local transceiver may implement the function for receiving a signal from a remote transceiver and for decoding the signal to recover the information bits from the signal. However received signals may be delayed and distorted by the transmission channel as the characteristics of real transmission channels are non-ideal, such that at a receiving transceiver a received signal may be erroneous. For example when the signal is transmitted wireless, for example as a radio signal in a cell phone system, the signal may be reflected or diffracted by buildings such that the transmission channel effectively is a multipath channel, i.e. the signal has travelled along a multiplicity of paths from the sending to the receiving transceiver, thus causing superposition of the signals from the multiple paths at the receiving transceiver.

In order to use a non-ideal transmission channel most effectively a plurality of measures has be developed. For example in conventional systems the digital data to transmit, i.e. the information bits, may be encoded by the encoder in the transmitting transceiver to enable forward error correction (FEC), such that the receiving transceiver may detect and correct errors in transmitted. Generally speaking the encoder may add redundant information to provide additional information for detecting and correcting errors. Additionally a receiving transceiver may use an equalizer for processing a received signal such that distortions caused by the transmission channel are reversed or at least mitigated.

However in order to reverse the distortions the equalizer in the receiving transceiver must have some knowledge about the distortions caused by the transmission channel. In conventional systems pilot signals, i.e. predefined signals known to the receiving transceiver, may be transmitted, such that the receiving transceiver may compare the received signals with the known signals for determining channel characteristics and for adjusting an equalizer correspondingly. Apparently this approach is suboptimal as pilot symbols do not carry any payload information and in terms of spectral efficiency makes it less efficient.

Scherb at al. disclose in "On Phase Correct Blind Deconvolution of Flat MIMO Channels Exploiting Channel Encoding" an algorithm separating blindly the sources of a flat MIMO-communiction link, where all sources are independently channel encoded. To this end the method exploits statistical dependencies caused by the channel code for blindly estimating the channel and simultaneously adjusting a linear equalizer. For channel encoding regular low density parity check (LDPC) codes for channel encoding are used.

In "On Phase Correct Blind Deconvolution exploiting Channel Coding" Scherb et al. disclose an algorithm that estimates the channel blindly exploiting the statistical dependencies of thwe transmitted signal caused by channel coding. For channel coding a one-level encoding path is used.

Particularly since the advent of turbo codes the use of iterative systems for decoding has been investigated in various scenarios. One example is Turbo Equalization wherein a so-called Soft Input Soft Output (SISO) equalizer may exchange extrinsic information with a SISO decoder. Based on this exchanged information the turbo equalizer is able for example to reduce intersymbol interference (ISI) effects. However such conventional systems assume knowledge of the impulse response of the multipath channel for adjusting the equalizer. Said information may be detected using pilot symbols as in conventional systems, which degrades the spectral efficiency.

To increase spectral efficiency while still using a turbo equalizer blind channel estimation can be used, i.e. wherein no pilot symbols are transmitted for enabling the receiving transceiver to directly estimate the transmission channel characteristics. Instead channel characteristics are estimated based on the properties of an unknown signal, i.e. the receiving transceiver is blind regarding the contents of the transmitted signal, thus enabling the use of payload signals.

SHORT DESCRIPTION OF THE FIGURES

The accompanying drawings, which are incorporated herein and form a part of the specification, illustrate the present invention and together with the description, further serve to explain the principles of the invention and to enable a person skilled in the pertinent art to make and use the invention.

Fig. 1         depicts a schematic of a transmitter chain in a transceiver;
Fig. 2         depicts a schematic of a receiver chain in a transceiver;
Fig. 3         depicts the bit error rate (BER) of a proposed turbo equalizer with perfect knowledge of the channel impulse response and the proposed blind turbo equalizer;
Fig. 4         depicts the mean squared error (MSE) of the channel estimation error;

Figs. 5a, 5b    depict the influence of the length of a logic string.

DETAILED DESCRIPTION OF THE INVENTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.

The circuitry and methods described herein may be implemented for example in any arbitrary equipment. In so far a transceiver comprising the transmitter chain or receiver chain or implementing one of the disclosed methods may be incorporated in any mobile user equipment, for example such as a cell phone, or in any stationary equipment such as a base station or any other component of a network for transmitting digital data.

In the subsequent description the term "logic string" is used, wherein the term is defined as follows. A set of encoded bits is called a logic string, when the XOR-conjunction of its elements always gives a zero for each arbitrary original data sequence. For explaining this definition, we assume that a rule exists drawing $N$ logic strings of length $M$ according to an encoding scheme. We denote by $A$ the set of cardinality $N$ containing all time indices corresponding to logic strings of this type. Let $\lfloor \tau_{1,n}, \tau_{2,n}, .., \tau_{M,n} \rfloor \in A$ be the time indices corresponding to the $n$-th logic string. Then, the equation

$$c\left(\tau_{1,n}\right) \oplus c\left(\tau_{2,n}\right) \oplus .. \oplus c\left(\tau_{M,n}\right) = 0 \qquad (A)$$

holds for $n=1,..,N$.

After interleaving the string

$$d\left(\pi_{1,n}\right) \oplus d\left(\pi_{2,n}\right) \oplus d\left(\pi_{M,n}\right) = 0 \qquad (B)$$

is equivalent to equation (A) and the set of valid logic strings is determined by

$$B = \left\{ \left[ \pi\left(\tau_{1,n}\right), \pi\left(\tau_{2,n}\right), ..., \pi\left(\tau_{M,n}\right) \right] \right\} \qquad (C).$$

After mapping the encoded bits onto signal space, the XOR operator $\oplus$ in equation (A) can be replaced by multiplications such that

$$s\left(\pi_{1,n}\right) s\left(\pi_{2,n}\right) \cdots s\left(\pi_{M,n}\right) = 1 \qquad (D).$$

holds, wherein s(x) denotes a symbol at index time x. Furthermore, the $M$-th order moments for any $k_1,k_2,...k_M \notin B$ vanish, i.e.

$$E\left\{s\left(k_1\right) s\left(k_2\right) \cdots s\left(k_M\right)\right\} = 0 \qquad (E),$$

wherein $E\{\ \}$ is the expectation of an argument.

Furthermore a code is called asymmetric if the negation of each valid code word is not a valid code word, i.e.

$\vec{c} \in C \Rightarrow \bar{\vec{c}} \notin C$. Note that if the code incorporates a logic string of odd length $M$ then the code is always non-symmetric. Further explanations relating to logic strings are disclosed in published document "On Phase Correct Blind Deconvolution exploiting Channel Coding" by A. Scherb, Volker Kühn and K.-D. Kammeyer, IEEE International Symposium on Signal Processing and Information Technology, 2003.

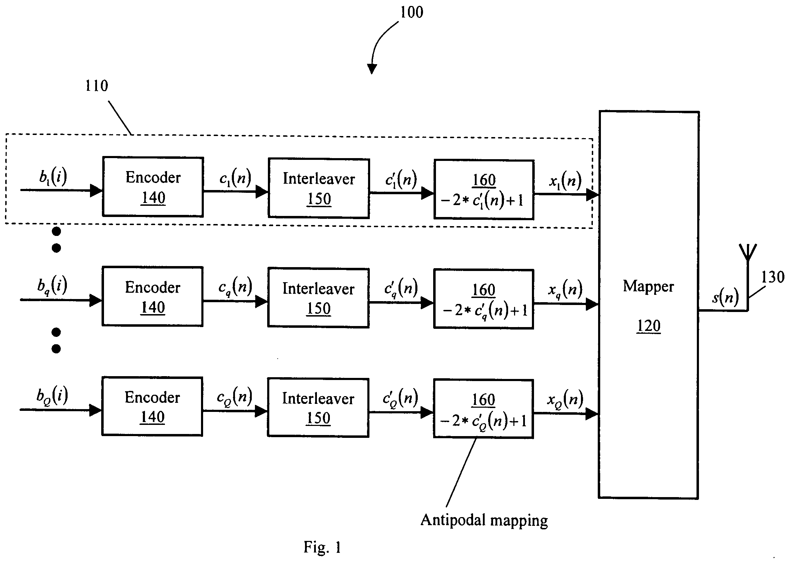

Figure 1 depicts a transmitter chain 100 of a transmitting transceiver according to an embodiment of the invention. The transmitter chain comprises a plurality of a total of encoding Q levels, wherein Q denotes an integer number. In the figure the first level 110 is denoted by index 1, the q-th level is indexed q and the last level is indexed Q. Each level may be implemented by one of a plurality of parallel processing paths, wherein each may comprise identical processing blocks. Each of the processing paths leads to a mapper 120 mapping received bits to a symbol of an $2^Q$-order modulation. Mapper 120 accordingly maps one bit of each of the Q levels to one symbol. The output of mapper 120, i.e. signal $s(n)$ in turn will be transmitted via a transmission channel to a receiving transceiver. In one embodiment the the signal $s(n)$ is transmitted in time domain thus implementing a single carrier communication. A cyclic prefix may or may not be appended in order to reduce equalization complexity. An antenna, illustrated by antenna 130, irradiates the transmitting signal $s(n)$, in a cell phone radio channel with multipath characteristics.

When operating transmitter chain 100 a plurality of Q streams of information bits is fed as input into transmitter chain 100, wherein one of the plurality of Q levels 110 takes one stream of information bits as input. A plurality of consecutive information bits of one input stream may be considered to form a vector. Accordingly a vector $\vec{b}_q = [b_q(1),b_q(2),..,b_q(i),..,b_q(N)]^T$ of a number of N information bits fed as input into the $q$-th level is encoded by an encoder 140. Encoder 140 encodes the N information bits of said vector into a vector of coded bits $\vec{c}_q=[c_q(1),c_q(2),..,c_q(i),..,c_q(N)]^T$ using an asymmetric code.

Subsequently to encoding in each level q vector $\vec{c}_q$ optionally may be interleaved by a S-random interleaver 150, which outputs a vector of interleaved encoded bits $\vec{c}'_q$. Note that the interleaving is not truly random, but can be reversed in the receiving transceiver by a corresponding de-interleaver.

The interleaved encoded bits are then passed through a processing block 160 producing a vector $\vec{x}'_q$ of antipodal bits from the interleaved encoded bit vector $\vec{c}'_q$. The antipodal bits of vectors $\vec{x}'_1 \cdot \cdot \vec{x}'_Q$ are then passed as input to multilevel modulator 120. Note that the modulation may be any arbitrary $2^Q$ modulation, which in one embodiment may be a QAM modulated signal, since a QAM modulated signal can be considered as a superposition of two orthogonal PAM signals.

Multilevel modulator 120 maps a signal $s(n)$ to each vector

$$\vec{x}(n) = \left[x_1(n),..,x_q(n),..,x_Q(n)\right]^T .$$

The mapping function $x(n) \rightarrow s(n)$ of multilevel modulator 120 accordingly is given as

$$s(n) = \vec{z}^T \vec{x}(n), \qquad\qquad (1)$$

wherein $\vec{z} = \left[z_1,..,z_q,..,z_Q\right]^T$ corresponds to the amplitude of each level and wherein $\vec{z}^H \vec{z} = 1$.

The elements of vector $\vec{z}$ are given as

$$z_q = 2^{Q-q-1} \cdot d \qquad\qquad (2),$$

wherein d denotes the distance between two amplitude levels.

Each signal $s(n)$ is then transmitted through a multipath channel of length L wherein the time discrete channel is characterized by an impulse response of $\vec{h} = \left[h(1),..,h(l),..h(L)\right]^T$, wherein the elements of vector $\vec{h}$ denote the coefficients of the time discrete channel. Note that in the following the shorthand notation $h_l = h(l)$ is used.

Furthermore the channel adds white Gaussian noise $w(n)$ (AWGN) to the transmitted signals. The additive white Gaussian noise $w(n)$ has a variance of $\sigma^2 = N_0/2$, with N being the noise power density and the energy normalized to 1. A received $n$-$th$ signal accordingly can be described as

$$r(n) = \sum_{i=0}^{L-1} h(i)s(n-i) + w(n)$$ .

Accordingly a multilevel transceiver for transmitting data in a communication system is disclosed, wherein the multilevel transceiver comprises a plurality of coding paths 110 terminating in a mapper 120 for mapping vectors of bits to a signal to be sent over a channel. Each of the coding paths comprises an encoder 140 and an interleaver 150.

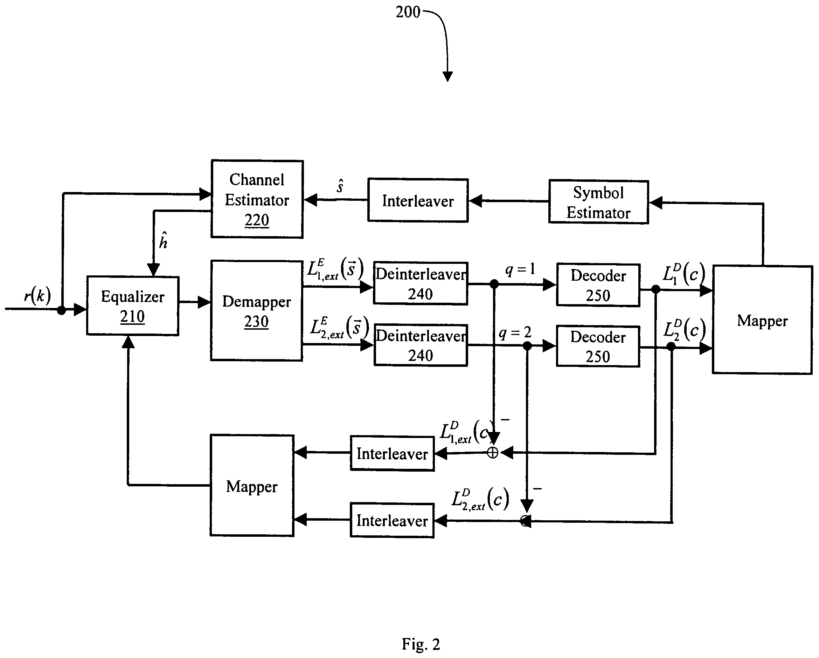

Figure 2 depicts a receiver 200 adapted and configured for receiving and processing signals from above described multipath channel. Note that this receiver may form part of a transceiver.

In one embodiment the *k-th* received signal *r(k)* may be a 4-PAM signal, i.e. a pulse amplitude modulated (PAM) signal using 4 different amplitudes for transmitting 2 bits per symbol, the number of encoding levels Q thus being 2. The received signal, i.e. the input signal of the receiver 200, is fed as input to equalizer 210 and to channel estimator 220 and is used for estimating the channel and for equalization. Note that any soft input/soft output equalizer may be used as equalizer 210. The equalized output of equalizer 210 is fed as input to demapper block 230, which outputs the bits associated with the symbol/signal provided by equalizer. According to the number of encoding levels, i.e. Q=2, demapper 230 is coupled to two output - decoding -paths, i.e. for q=1 and q=2. Equalizer 210 and demapper 230 compute the extrinsic information of each received symbol for each level $L_{q,ext}^{E}(\vec{x})$, wherein q denotes the coding level, E an output of equalizer 210 and *ext* denoting the *extrinsic* information.

The extrinsic information of each level $L_{q,ext}^{E}(\vec{s})$ is then deinterleaved in an deinterleaver 240 comprised in each decoding path, which reverses the interleaving of the interleaver 150 of the transmitting chain. The deinterleaved extrinsic information of each level q is then forwarded to decoders 250 for using the extrinsic information as an estimate of a-priori information in each decoder, i.e. each decoder in a path q uses the extrinsic information $L_{q,ext}^{E}(\vec{s})$ of that level q. Each decoder 250 computes the a-posteriori information $L_{q}^{D}(\vec{c})$ and the extrinsic information $L_{q,ext}^{D}(\vec{c})$ of the coded bits.

The interleaved extrinsic information of coded bits is then mapped and is used as a-priori information by the equalizer 210. Based on the new a-priori information provided by the channel decoder 250, the equalizer 210 refines the estimate of the extrinsic information $L_{q,ext}^{E}(\vec{s})$ of each level which is used as a new estimate of the a priori values of the decoders 250. In this manner the estimates performed by Equalizer 210 and decoders 250 are iteratively refined.

The a-posteriori value is used by the channel estimator 220 estimating the channel characteristics, i.e. the impulse response values $\hat{h}_l$. Since the a-posteriori output of the decoders 250 is iteratively refined due to the exchange of information with the equalizer 210 the estimate of the channel is also improved.

Note that the total a-posteriori information of the decoder can be used in the channel estimator 220 since the values of $\vec{s}$ are uncorrelated with the coefficient values *h* of the multipath channel. Throughout the iterations the quality of the output of the equalizer, the decoder and the channel estimator can be refined until the receiver chain 200 does not show any further improvement or until a predefined maximum number of iterations is reached. The order of activation of the components of the receiver is not defined; i.e. any arbitrary order can be used.

The processing blocks in this way form a turbo equalizer for estimating channel tap values, i.e. coefficients of the impulse response of the time discrete transmission channel, wherein the term "turbo" relates to the feedback path comprising the channel estimator, which in a turbo fashion way allows to initially estimate and/or iteratively refine the channel tap values.

Accordingly a multilevel transceiver for receiving data in a communication system is disclosed, the transceiver comprising a turbo equalizer, wherein the turbo equalizer is configured and adapted to estimate channel tap values of a channel impulse response based on exploiting statistics of logic strings that multilevel codes impose on a received signal.

Statistics of multilevel encoded signals

In order to make use of the constraints of the channel code for estimating the characteristics of the channel the stream of bits for a particular level *q* is analysed. A binary linear block code of the *q*-th level can be characterized by its generator matrix $G_q \in [0,1]^{N \times I}$ and by its parity check matrix $H_q \in [0,1]^{M \times N}$, such that in the *q*-th level a vector of coded bits $\vec{c}$ can be generated from a vector of uncoded bits $\vec{b}$ using said generator matrix

$$\bar{c}_q = G_q \bar{b}_q, \qquad (1)$$

with

$$H_q \bar{c}_q = \bar{0}, \qquad (2)$$

wherein the operations are performed over a Galois field (2) (GF(2)).

Accordingly the constraints, i.e. the parity check matrix imposed by the code, i.e. the asymmetric code as described above with reference to fig. 1, can be used for estimating the channel characteristics, i.e. the values of $h_l$.

Let the set $A_q = \left\{ \left\{ \lambda_{m,1}^q, \ldots, \lambda_{m,p}^q, \ldots, \lambda_{m,P_q}^q \right\} \right\}$ be the set of $M$ vectors (subsets) with the indices of the non-zero elements of $m$ - th row of the parity check matrix $H$.

The parity check equation for $m$ is

$$\sum_{i=1}^{P_q} c_q \left( \lambda_{m,i}^q \right) = 0 \; ; \text{ for } \left\{ \lambda_{m,1}^q, \ldots, \lambda_{m,P_q}^q \right\} \in A_q \qquad (3).$$

Further we assume that the information bits are identically and independently distributed (i.i.d), such that sums taken over GF(2) of arbitrary bits $\left\{ \lambda_{m,1}^q, \ldots, \lambda_{m,p}^q, \ldots, \lambda_{m,P_q}^q \right\} \notin A_q$ are equally probable to be 0 or 1, we find

$$\Pr\left( \sum_i^{P_q} c_q(k_i) = 0 \right) = \Pr\left( \sum_i^{P_q} c_q(k_i) = 1 \right) = \frac{1}{2} \qquad (4),$$

with index i being $i=1, \{k_l, \ldots, k_{P_q}\} \notin A_q$.

An index operator $\pi^q(k)$ can be defined on bit level $q$ such that $c_q(k)=x_q(\pi^q(k))$ holds. This index operator is now used as shorthand notation to address the bits of a parity check equation, wherein the term 'logic string' is used herein subsequently for such a group according to the description of logic strings above.

The set of $M$ vectors containing the positions indexed by the set $A_q$ after interleaving is then denoted as

$$B_q = \left\{ \left[ \pi_{m,1}^q, \ldots, \pi_{m,p}^q, \ldots, \pi_{m,P_q}^q \right] \right\}.$$

Due to the antipodal mapping of the coded bits and as a consequence of (3) the following relation holds

$$\prod_{\pi_{m,1}^q}^{P_q} x_q \left( \pi_{m,1}^q \right) = 1 \qquad (5),$$

with $\left\{ \left[ \pi_{m,1}^q, \ldots, \pi_{m,P_q}^q \right] \right\} \in B_q$.

Accordingly equation (4) can be transformed to

$$E\left\{\prod_{i=1}^{P_q} x_q(k_i)\right\} = 0 \quad , \qquad (6)$$

with $\{[k_l,..,k_{P_q}]\} \notin B_q$ and wherein the expectation $E$ is taken over arbitrary , i.e. non-logic, strings of the codeword.

Since the bits of a multilevel coded signal are independent and taking equation (1) into account we find for the expectation $E$

$$E\left\{\prod_{i=1}^{P_q} s(\pi_{m,i}^q)\right\} = E\left\{\prod_{i=1}^{P_q} z_q x_q(\pi_{m,i}^q)\right\} + \sum_{j=1, j\neq q}^{Q} E\left\{\prod_{i=1}^{P_q} z_j x_j(\pi_{m,i}^q)\right\} \quad ;$$

$$\text{with } \left\{\left[\pi_{m,1}^q,..,\pi_{m,P_q}^q\right]\right\} \in B_q \qquad (7).$$

Since we use different interleavers 150 in each level $q$ of Fig. 1 and different codes, the indices of the logic strings of one single $q$-th level do not coincide with logic strings of another level, which can be expressed as $X_i \neq X_j, i \neq j$. Accordingly we find for the expectation $E$

$$E\left\{\prod_{i=1}^{P_q} z_j x_j(\pi_{m,i}^q)\right\} = 0; \quad \text{with } j \neq q, \left\{\left[\pi_{m,1}^q,..,\pi_{m,P_q}^q\right]\right\} \in B_q \qquad (8)$$

and

$$E\left\{\prod_{i=1}^{P_q} s(\pi_{m,i}^q)\right\} = E\left\{\prod_{i=1}^{P_q} z_q x_q(\pi_{m,i}^q)\right\} = z_q^{P_q} \quad ;$$

with

$$\left\{\left[\pi_{m,1}^q,..,\pi_{m,P_q}^q\right]\right\} \in B_q \qquad (9).$$

Subsequently a method for blind channel estimation with multilevel codes without prior information, i.e. without a-priori information of the bits, i.e. without feedback from the decoder, is described.

These statistics are used for estimating the $l$-th tap of the channel, wherein the $P_q$-th order moment $\xi_l^q$ of the received symbols at the indices of the logic strings of the $q$-th level is used. The result of this moment isolates one desired tap, i.e. $h_l$, that is weighted by the coded bits belonging to the logic strings of the $q$-th level an other remaining terms composed by the combination of coded bits that do not from logic strings.

The moment $\xi_l^q$ is defined by

$$\xi_l^q = E\left\{r(\pi_{m,1}^q + l)\prod_{i=2}^{P_q} r(\pi_{m,i}^q + v)\prod_{i=\tilde{P}_q+1}^{P_q} r^*(\pi_{m,i}^q + v)\right\} \qquad (10)$$

$$\tilde{P}_q = \frac{P_q + 1}{2}$$

wherein , $\hat{h}$ is the estimated value of the strongest tap of the channel, $v$ is the position of the strongest tap of the channel and $r^*$ denotes the complex conjugate of $r$.

Setting $l=v$ we can estimate the main tap of the channel in a first iteration. Once the value for this tap is sufficiently estimated values for other taps can be estimated as a function of the absolute value of the main tap, i.e. for $l \neq v$.

The $P_q$-th order moment can be written as

$$\xi_l^q = h_l |h_v|^{P_q - 1} \underbrace{E\left\{ \prod_{i=1}^{P_q} s\left(\pi_{m,i}^q\right) \right\}}_{z_q^{P_q}} + \varepsilon \qquad (11).$$

The estimator is composed of the left side of equation (11), which is the desired portion for estimating the channel, and of $\varepsilon$, which is given by

$$\varepsilon = \sum_{(i_1,..,i_{P_q}) \in I \notin (l, v, v, ..)} \prod_{p=1}^{\tilde{P}_q} h_{i_p} \prod_{p=\tilde{P}_q+1}^{P_q} h_{i_p}^* \cdot E\left\{ s\left(\pi_{m,1}^q + l - i_1\right) \prod_{p=2}^{P} s\left(\pi_{m,p}^q - i_p + v\right) \right\}$$

$$(11a),$$

wherein $I$ is the set with indices of all possible $P_q$ tuples $(i_1, ..., i_{P_q})$. Since the expectation $E$ is taken over elements not being logic strings, it is equal to zero.

Accordingly the $P_q$-th order moment is

$$\xi_l^q = \begin{cases} z_q^{P_q} h_v |h_v|^{P_q - 1}, & l = v \\ z_q^{P_q} h_l |h_v|^{P_q - 1}, & l \neq v \end{cases} \qquad (12).$$

Furthermore we find

$$\hat{h}_l^q = \frac{\xi_l^q}{|h_v|^{P_q - 1} z_q^{P_q}} \qquad (12a)$$

and

Equation (10) proves that (12) is an estimator of the $l$-th tap pondered by the absolute value of the main tap to the power of $P_q$-1, which is the first tap to be estimated.

Note that although estimates of the channel impulse response, i.e. the channel tap values, can be obtained from all bit levels, the one obtained for $q=1$ is the most reliable, confer equation (2). A small mean of the moment $\xi_l^q$ causes a strong rise of the mean square error (MSE) of the tap value estimate, because a root of order $P_q$ has to be taken of quantity with absolute value smaller than one for passive channels, confer "Statistics of a Blind Channel Estimator based on 'Logic Strings'" by W. Rave, A. F. dos Santos and G. Fettweis, 7th International ITG Conference on Source and Channel Coding (SCC08). Accordingly we use equation (10) only with level $q=1$ for estimating the channel tap values. This allows a particular suitable code for this task at that level, while other bit levels can be encoded with codes designed to minimize the Bit Error Rate (BER) in order to achieve a good trade-off between channel estimation quality and BER of the system.

The possibility of using the combination of several estimators, i.e. different values of q, decreases the variance of the estimator. Furthermore we assume that we have knowledge of the position of the strongest path of the channel. The algorithm used in channel estimator 220 for estimating the channel tap can then be written in pseudo code as

Initialization: Determine position $v$ of the strongest channel tap

Step 1: For estimating the value of the main tap:

Compute $\xi_l^q$ according to equation (10) with $l=v$, and

$$\hat{h}_v^q = \frac{\sqrt[P_q]{\left|\xi_v^q\right|}}{z_q^{P_q}} \angle \xi_v^q$$

Compute

Step 2: for $l=1,...,v-1,v+1,...,L$ compute $\hat{h}$ according to equation (12a)

Accordingly a method for estimating the channel impulse response of a data communication system is disclosed, wherein a turbo equalizer is used for estimating channel tap values of the impulse response based on exploiting statistics of logic strings that multilevel codes impose on a transmitted signal.

Further note that in practice it is nearly impossible to evaluate the true expectation of equation (10) since a finite frame size and a timer average are used. This leads to a $\varepsilon$, confer equation (11a), different from zero. Furthermore the value of the expectation over the logic strings in equation (9) slightly fluctuates around $Z_q^{P_q}$ due to the limited number for observations, i.e. the limited iterations.

The main goal here is to minimize $\varepsilon$ and compute the value of equation (9) for a particular observation with the help of the decoder output. A suitable method is derived in the following.

Next a method for blind channel estimation using prior information is described. Note that the subsequently method for iteratively refining the channel tap values may start from arbitrary initial channel tap values. That is the initial channel tap values may be determined as described above, or they may be determined by any other method.

In the subsequent description index q is dropped in the equations since it is equal to 1 and we are relying on the statistics of the most reliable first bit level, i.e. the one related to the largest distance in signal space.

When a-priori information from the decoder is available the blind channel estimator can be modified by replacing receive symbols in the moments $\xi_l^1$ with soft symbol estimates to reduce data dependent noise $\varepsilon$. This residual error for the estimated tap value is due to the fact that the time average is used in equation (10) instead of the true expectation.

The idea is to use the a-posteriori output of the decoder, i.e. $L^D(\bar{c})$, and the channel tap values $\hat{h}$ estimated in the previous iteration of the turbo equalizer for cancelling the residue. However, using estimates of the channel from the previous iteration to cancel the residue $o$ could lead to error propagation, since the estimation of $h_l$ would use previous estimates of the tap value itself. Aware of this fact we change the moment of order $P_1 = P$ computed for estimating the $l$-th tap value of the channel in such a way that the residual error created for the time average does not include said $l$-tap value.

The modified version of the $P$-th-order moment is used in the channel estimator 220 after the initial estimation is calculated as

$$\varsigma_l = \frac{1}{M} \sum_{m=1}^{M} \left( r\left(\pi_{m,l} + l\right) \prod_{k=2}^{P} \hat{s}\left(\pi_{m,k}\right) \right) \tag{13},$$

wherein we assume that the delay of the strongest path of the channel is either properly estimated by some existing algorithm for this purpose or by first varying $l=v$ between zero and some maximum value, and wherein $M$ is the number of evaluated logic strings and $\hat{s}$ is the vector of estimated soft output symbols computed from the decoder likelihood values ($L$-values) obtained with the BCJR algorithm:

$$\hat{s} = E\{s(n)\} = \sum_{s_i \in S} s_i P_a\big(s(n) = s_i\big) \qquad (14),$$

wherein S denotes the set of symbols $s_i$ of the modulation alphabet and $P_a$ denoting the a-priori probabilities, which are computed from the L-values.

It is easily shown that equation (13) is again composed of one constructive part used for estimating the desired tap value and a residual error formed by code symbols not being logic strings:

$$\varsigma_l = h_l \frac{1}{M} \sum_{m=1}^{M} \left( s(\pi_{m,l}) \prod_{k=2}^{P} \hat{s}(\pi_{m,k}) \right) + u \qquad (15),$$

where $u$ is the residual error due to the approximate expectation, i.e. average, over non-logic strings components:

$$u = \sum_{i=0,i\neq l}^{L-1} h_i \underbrace{\frac{1}{M} \sum_{m=1}^{M} \left( s(\pi_{m,l}) \prod_{k=2}^{P} \hat{s}(\pi_{m,k}) \right)}_{\approx 0} \qquad (16).$$

Note that the sum in equation (16) involves all the tap values of the channel except of the desired $l$-th tap value. Therefore the previous estimates of these taps can be used for cancelling the residual error $u$ without error propagation throughout the iterations of the turbo equalizer, i.e. throughout the iterations of receiver chain 200. Hence, using the estimated taps from the previous iteration, i.e $h$, and the estimated symbols $\hat{s}$, the estimated residual error $\hat{u}$ can be determined by:

$$\hat{u} = \sum_{i=0,i\neq l}^{L-1} \hat{\hat{h}}_i \frac{1}{M} \sum_{m=1}^{M} \left( s(\pi_{m,l} + l) \prod_{k=2}^{P} \hat{s}(\pi_{m,k}) \right) \qquad (17).$$

where $\hat{\hat{h}}_i$ is the estimated tap on the previous iteration of the turbo equalizer Throughout the iterations of the turbo equalizer, i.e. of receiver chain 200, the residual of the non-true expectation is estimated and used for improving the quality of the estimated tap according to

$$\hat{h}_l' = \varsigma_l - \hat{u} = h_l \underbrace{\frac{1}{M} \sum_{m=1}^{M} \left( s(\pi_{m,l} + l) \prod_{k=2}^{P} \hat{s}(\pi_{m,k}) \right)}_{desired-term} + \eta \qquad (18),$$

wherein $\hat{h}_l$ is a biased estimator and $\eta$ is the new residual of the channel estimator given by

$$\eta = \sum_{i=0,i\neq l}^{L-1} h_i \frac{1}{M} \sum_{m=1}^{M} \left( s(\pi_{m,l} + l) \prod_{k=2}^{P} \hat{s}(\pi_{m,k}) \right) - \sum_{i=0,i\neq l}^{L-1} \hat{\hat{h}}_i \frac{1}{M} \sum_{m=1}^{M} \left( \hat{s}(\pi_{m,l} + l) \prod_{k=2}^{P} \hat{s}(\pi_{m,k}) \right)$$

Finally an unbiased estimate of $h_l$ can be obtained by dividing $\hat{h}_l'$ with the *desired-term* of equation (18), wherein we consider being $\eta$ very small, such that we get:

$$\hat{h}_l = \frac{\hat{h}'_l}{\frac{1}{M}\sum_{m=1}^{M}\left(\prod_{k=1}^{P}\hat{s}\left(\pi_{m,k}\right)\right)} \qquad (19).$$

In one embodiment the estimates according to equation (19) may be computed in channel estimator block 220, which receives all necessary input for this computation. Channel estimator 220 provides the estimated tap values $\hat{h}_l$ to equalizer 210 for further adjusting the equalizer, i.e. for refining the channel tap values deployed by equalizer 210.

Accordingly a method for refining coefficients, i.e. the channel tap values, of an estimated channel impulse response of a data communication system, wherein a turbo equalizer is used for estimating the coefficients based on exploiting statistics of logic strings that multilevel codes impose on a transmitted signal and wherein the turbo equalizer uses a-posteriori output of a decoder comprised in the turbo equalizer and the channel tap values estimated in a previous iteration of the turbo equalizer for cancelling a residue error.

In a preferred embodiment a 4-PAM signal with two levels is used. In the first level we use a ½ rate convolutional code with generators (1,5) in octal notation. It produces short logic strings with P=3. The variance of the blind channel estimator for the iteration zero, i.e. when no a priori value is available, decreases with the size of the logic string. Hence, the value of 3 for the logic string is optimum in terms of channel estimation. In the second level we use a parallel convolutional code with two recursive convolutional codes with generators (7,5) in octal notation. The channel used for the simulation is a 5 equally weighted tap Rayleigh channel that changes its impulse response at each frame. The frame size is 4096 PAM symbols.

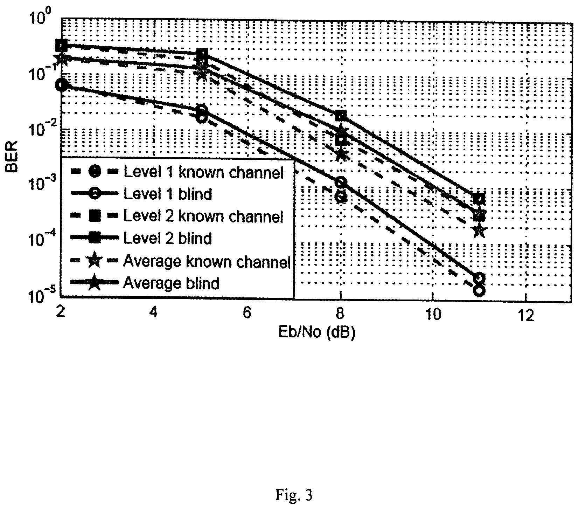

Figure 3 compares the bit error ratio (BER) of a turbo equalizer with perfect knowledge of the channel impulse response and the proposed blind turbo equalizer. All the results are shown for the last iteration of the turbo equalizer. The results for the first level, second level and the average of both are compared. Notice that the blind turbo equalizer almost reaches the same performance of the turbo equalizer with perfect knowledge of the channel impulse response.

$$MSE = \sum_{l=1}^{L}\left(h_l - \hat{h}_l\right)$$

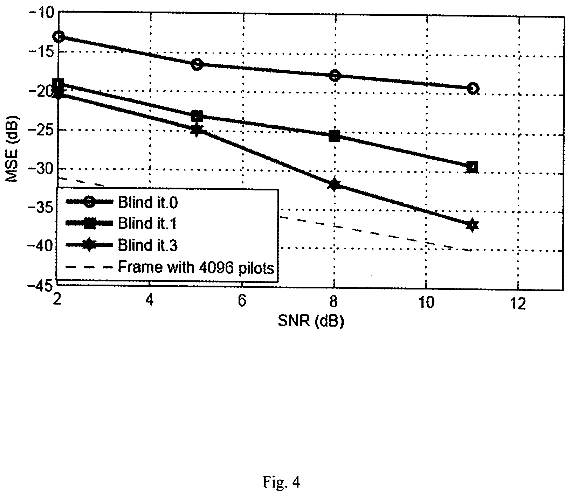

Figure 4 shows the MSE (mean squared error) in dB of the channel estimation error in different iterations. We compare its performance with a reference system where only pilots are transmitted (4096 pilot symbols). Notice that for a high SNR the blind turbo equalizer approximates to the performance of our reference system fairly well.

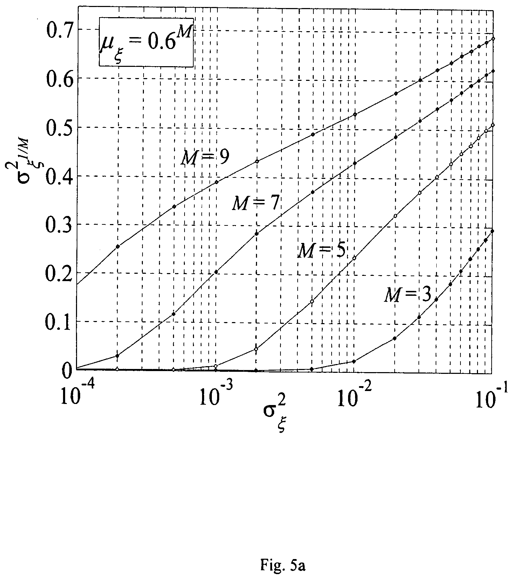

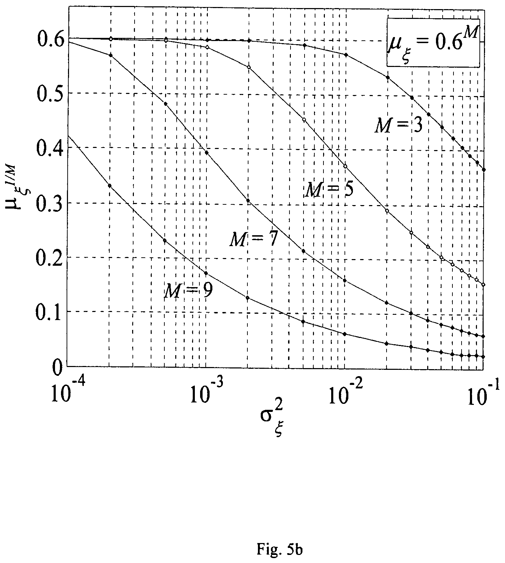

Figures 5a, 5b show the influence of the logic string length $P$ for a fixed mean $\mu_\xi$=0.6 of the real valued $\xi_v$, wherein simulations of $P$ = 3,5,7,9 are shown. The resulting variance in Fig. 5a and mean in Fig. 5b of the estimated random variable $\hat{h}_v = \xi^{1/P}$ is presented as a function of $\sigma_\xi^2$. From these simulation results it is apparent that shorter strings are preferable, particularly a logic string length of $P$ = 3 is preferable.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention. Thus, the present invention is defined by the appended claims.

**Claims**

1.    A method for refining channel tap values, $\hat{h}$, of an estimated channel impulse response at a receiver (200) of a data communication system, comprising:

- at a transmitter (100):

encoding information bits using multilevel codes via a plurality, $1...Q$ of parallel encoding paths (110), each encoding path implementing one level of the multilevel code and comprising an encoder (140) for encoding a set of information bits into a set of encoded bits, wherein the set of encoded bits forms a logic string, wherein a logic string is **characterized in that** a XOR conjunction of the elements of the logic string gives a zero, mapping one bit of each of the Q encoding paths (110) to one symbol of an $2^Q$-order modulation, and

transmitting the symbol, and

- at the receiver (200):

receiving a transmitted symbol, $s$,
equalizing the received symbol,
demapping the equalized symbol thus producing encoded bits of the encoding paths,
decoding the encoded bits using a plurality of $Q$ parallel decoding paths,
initially estimating a channel impulse response using turbo-equalization to estimate channel tap values, $\hat{h}$, of the channel impulse response based on exploiting statistics of logic strings, and
refining channel tap values, $\hat{h}$, of the estimated channel impulse response, wherein a-posteriori output of decoding and channel tap values of a previous iteration, $\hat{h}$, are used in turbo-equalization for cancelling a residual error.

2. The method of claim 1, further comprising:

- at the receiver (200):

estimating the transmitted symbol, $s$, based on an a-posteriori information of each decoder (250) in the decoding paths and
providing said estimated transmitted symbol, $\hat{s}$, to the equalizer (210).

3. The method of any preceding claim wherein:

- at the transmitter (100):

the $2^Q$-order modulation is a QAM modulation.

4. The method of any preceding claim further comprising:

- at the transmitter (100):

interleaving each set of encoded bits in each encoding path (110), and

- at the receiver (200):

de-interleaving each set of encoded bits in each decoding path.

5. The method of claim 4 wherein:

- at the transmitter (100):

in each encoding path (100) the information bits are encoded to different sets of encoded bits and the sets of encoded bits are interleaved differently.

6. The method of any preceding claim further comprising:

- at the transmitter (100):

mapping the bits of each set of encoded bits to antipodal bit values.

7. A multilevel transceiver for transmitting and receiving data of a communication system comprising:

- at a transmitter (100) side:

a plurality, $1...Q$, of encoding paths (110), each encoding path implementing one level of the multilevel code and comprising an encoder (140) for encoding a set of information bits into a set of encoded bits, wherein the set of encoded bits forms a logic string, wherein a logic string is **characterized in that** a XOR conjunction of the elements of the logic string gives a zero, and
a mapper (120) communicatively coupled to each of the Q encoding paths (110), said mapper adapted and configured for mapping one bit of each of the encoding paths (110) to one symbol of a $2^Q$-order modulation, and

- at a receiver (200) side:

an equalizer (210) for equalizing a received symbol, $s$,
a demapper (230) communicatively coupled to the equalizer (210) for demapping the equalized symbol thus producing encoded bits of the encoding paths,
a plurality $Q$ of parallel decoding paths, each communicatively coupled to the demapper (230) and each comprising a decoder (250) for decoding the encoded bits, and
a turbo equalizer comprising a feedback path comprising a channel estimator (220), wherein the estimator (220) is communicatively coupled to the equalizer (210), the turbo equalizer being adapted and configured
to initially estimate a channel impulse response using turbo-equalization to estimate channel tap values, $\hat{h}$, of the channel impulse response based on exploiting statistics of logic strings, and
to refine channel tap values, $\hat{h}$, of the estimated channel impulse response, wherein a-posteriori output of decoding and channel tap values of a previous iteration, $\hat{\hat{h}}$, are used in turbo-equalization for cancelling a residual error.

8. The multilevel transceiver of claim 7 further comprising:

- at the receiver (200) side:

a mapper communicatively coupled to each of the decoding paths, and
a symbol estimator communicatively coupled to the mapper, and
an interleaver communicatively coupled to the symbol estimator and the channel estimator (220) for providing the a-posteriori output of decoding to the channel estimator (220) for estimating the transmitted symbol, $s$.

9. The multilevel transceiver of any preceding claim 7 - 8, wherein:

- at the transmitter (100) side:

the $2^Q$-order modulation is a QAM modulation.

10. The multilevel transceiver of any preceding claim 7 - 9, wherein:

- at the transmitter (100) side:

the encoders (140) are configured and adapted for encoding information bits to different sets of encoded bits.

11. The multilevel transceiver of any preceding claim 7-10, wherein:

- at the transmitter(100) side:

each encoding path comprises an interleaver (150), and

- at the receiver (200) side:

each of the decoding paths comprises a deinterleaver (240).

12. The multilevel transceiver of claim 11, wherein:

- at the transmitter (100) side:

each encoding path comprises an antipodal mapper (160).

**Patentansprüche**

1. Ein Verfahren zum Verfeinern von Kanalverzögerungszeitpunktwerten, $\hat{h}$, einer geschätzten Kanalimpulsantwort an einem Empfänger (200) eines Datenkommunikationssystems, umfassend:

   - bei einem Sender (100):

      Kodieren von Informationsbits unter Verwendung von Mehrstufenkodes über eine Vielzahl, 1...Q, an parallelen Kodierungspfaden (110), wobei jeder Kodierungspfad eine Stufe des Mehrstufenkodes umsetzt und einen Kodierer (140) zum Kodieren eines Satzes an Informationsbits in einen Satz an kodierten Bits umfasst, wobei der Satz an kodierten Bits eine logische Folge bildet, wobei eine logische Folge **dadurch gekennzeichnet ist, dass** eine XOR-Verknüpfung der Elemente der logischen Folge eine Null ergibt, Abbilden eines Bits jedes der Q Kodierungspfade (110) in ein Symbol einer Modulation $2^Q$-ter Ordnung und

   - bei dem Empfänger (200):

      Empfangen eines übertragenen Symbols , s, Vergleichmäßigen des empfangenen Symbols, Zurückbilden des vergleichmäßigten Symbols, wodurch kodierte Bits der Kodierungspfade erzeugt werden, Dekodieren der kodierten Bits unter Verwendung einer Vielzahl an Q parallelen Dekodierungspfaden, initiales Schätzen einer Kanalimpulsantwort unter Verwendung von Turbo-Vergleichmäßigung, um Kanalverzögerungszeitpunktwerte, $\hat{h}$, der Kanalimpulsantwort basierend auf einem Ausnützen von Statistiken logischer Folgen zu schätzen, und Verfeinern von Kanalverzögerungszeitpunktwerten, $\hat{h}$, der geschätzten Kanalimpulsantwort, wobei eine a-posteriori Ausgabe des Dekodierens und

      Kanalverzögerungszeitpunktwerte einer vorherigen Iteration, $\hat{\hat{h}}$, in einer Turbo-Vergleichmäßigung zur Auslöschung eines restlichen Fehlers verwendet werden.

2. Das Verfahren nach Anspruch 1, ferner umfassend:

   - bei dem Empfänger (200):

      Schätzen des übertragenen Symbols, s, basierend auf einer a-posteriori Information jedes Dekodierers (250) in den Dekodierungspfaden und Bereitstellen besagten geschätzten übertragenen Symbols, *s,* an den Vergleichmäßiger (210).

3. Das Verfahren nach einem der vorherigen Ansprüche, wobei:

   - bei dem Sender (100):

      die Modulation $2^Q$-ter Ordnung eine QAM-Modulation ist.

4. Das Verfahren nach einem der vorherigen Ansprüche, ferner umfassend:

   - bei dem Sender (100):

      Verschachteln jedes Satzes an kodierten Bits in jedem Kodierungspfad (110) und

   - bei dem Empfänger (200):

      Entschachteln jeden Satzes an kodierten Bits in jedem Dekodierungspfad.

5. Das Verfahren nach Anspruch 4, wobei:

   - bei dem Sender (100):

in jedem Kodierungspfad (100) die Informationsbits in verschiedene Sätze an kodierten Bits kodiert werden und

die Sätze an kodierten Bits werden unterschiedlich verschachtelt.

6. Das Verfahren nach einem der vorherigen Ansprüche, ferner umfassend:

   - bei dem Sender (100):

      Abbilden der Bits jeden Satzes an kodierten Bits in antipodische Bitwerte.

7. Ein Mehrstufentransceiver zum Senden und Empfangen von Daten eines Kommunikationssystems, umfassend:

   - bei einer Senderseite (100):

      eine Vielzahl, 1...Q, an Kodierungspfaden (110), wobei jeder Kodierungspfad eine Stufe des Mehrstufenkodes umsetzt und einen Kodierer (140) zum Kodieren eines Satzes an Informationsbits in einen Satz an kodierten Bits umfasst, wobei der Satz an kodierten Bits eine logische Folge bildet, wobei eine logische Folge **dadurch gekennzeichnet ist, dass** eine XOR-Verknüpfung der Elemente der logischen Folge eine Null ergibt, und

      einen Abbilder (120), der kommunikativ an jeden der Q Kodierungspfade (110) gekoppelt ist, wobei besagter Abbilder zum Abbilden eines Bits jeden Kodierungspfads (110) in ein Symbol einer Modulation $2^Q$-ter Ordnung angepasst und eingerichtet ist, und

   - bei einer Empfängerseite (200):

      einen Vergleichmäßiger (210) zum Vergleichmäßigen eines empfangenen Symbols, s,
      einen Zurückbilder (230), der kommunikativ an den Vergleichmäßiger (210) gekoppelt ist, zum Zurückbilden des vergleichmäßigten Symbols, wodurch kodierte Bits der Kodierungspfade erzeugt werden,
      eine Vielzahl Q an parallelen Dekodierungspfaden, die jeweils kommunikativ an den Zurückbilder (230) gekoppelt sind und jeweils einen Dekodierer (250) zum Dekodieren der kodierten Bits umfassen, und
      einen Turbo-Vergleichmäßiger, der einen Rückführungspfad umfasst, der einen Kanalschätzer (220) umfasst, wobei der Schätzer (220) kommunikativ an den Vergleichmäßiger (210) gekoppelt ist, wobei der Turbo-Vergleichmäsiger angepasst und eingerichtet ist, um initial eine Kanalimpulsantwort unter Verwendung von Turbo-Vergleichmäßigung zu schätzen,
      um Kanalverzögerungszeitpunktwerte, $\hat{h}$, der Kanalimpulsantwort basierend auf einem Ausnützen von Statistiken logischer Folgen zu schätzen, und
      um Kanalverzögerungszeitpunktwerte, $\hat{h}$, der geschätzten Kanalimpulsantwort zu verfeinern, wobei eine a-posteriori Ausgabe des Dekodierens und

      Kanalverzögerungszeitpunktwerte einer vorherigen Iteration, $\hat{\hat{h}}$, in einer Turbo-Vergleichmäßigung zur Auslöschung eines restlichen Fehlers verwendet werden.

8. Der Mehrstufentransceiver nach Anspruch 7, ferner umfassend:

   - bei der Empfängerseite (200):

      einen Abbilder, der kommunikativ an jeden der Dekodierpfade gekoppelt ist, und
      einen Symbolschätzer, der kommunikativ an den Abbilder gekoppelt ist, und
      einen Verschachteler, der kommunikativ an den Symbolschätzer und den Kanalschätzer (220) gekoppelt ist, zum Bereitstellen der a-posteriori Ausgabe des Dekodierens an den Kanalschätzer (220) zum Schätzen des übertragenen Symbols, s.

9. Der Mehrstufentransceiver nach einem der vorherigen Ansprüche 7 - 8, wobei:

   - bei der Senderseite (100):

      die Modulation $2^Q$-ter Ordnung eine QAM-Modulation ist.

**10.** Der Mehrstufentransceiver nach einem der vorherigen Ansprüche 7 - 9, wobei:

- bei der Senderseite (100):

die Kodierer (140) zum Kodieren von Informationsbits in verschiedene Sätze an kodierten Bits angepasst und
eingerichtet sind.

**11.** Der Mehrstufentransceiver nach einem der vorherigen Ansprüche 7 - 10, wobei:

- bei der Senderseite (100):

jeder Kodierungspfad einen Verschachteler (150) umfasst und

- bei der Empfängerseite (200):

jeder der Dekodierungspfade einen Entschachteler (240) umfasst.

**12.** Der Mehrstufentransceiver nach Anspruch 11, wobei:

- bei der Senderseite (100):

jeder Kodierungspfad einen antipodischen Abbilder (160) umfasst.

**Revendications**

**1.** Procédé d'affinage de valeurs de prises de canal, h, d'une réponse impulsionnelle de canal estimée au niveau d'un récepteur (200) d'un système de communication de données, le procédé comprenant les étapes suivante

- au niveau d'un émetteur (100) :

codage de bits d'information au moyen de codes multiniveaux via une pluralité, $I...Q,$ de chemins de codage parallèles (110), chaque chemin de codage mettant en oeuvre un niveau du code multiniveau et comprenant un codeur (140) destiné à coder un ensemble de bits d'information en un ensemble de bits codés, l'ensemble de bits codés formant une chaîne logique, une chaîne logique étant **caractérisée en ce qu'**une conjonction OU-Exclusif des éléments de la chaîne logique donne un zéro,
mappage d'un bit de chacun des $Q$ chemins de codage (110) sur un symbole d'une modulation d'ordre 2, et transmission du symbole, et

- au niveau du récepteur (200) :

réception d'un symbole transmis, s,
égalisation du symbole reçu,
démappage du symbole égalisé pour ainsi produire des bits codés des chemins de codage,
décodage des bits codés au moyen d'une pluralité de Q chemins de décodage parallèles,
estimation initiale d'une réponse impulsionnelle de canal au moyen d'une turbo-égalisation dans le but d'estimer des valeurs de prises de canal, $\hat{h}$, de la réponse impulsionnelle de canal à partir de l'exploitation de statistiques de chaînes logiques, et
affinage de valeurs de prises de canal, $\hat{h}$, de la réponse impulsionnelle de canal estimée, une sortie a posteriori de décodage et des valeurs de prises de canal d'une itération précédente, $\hat{\hat{h}}$, étant utilisées dans la turbo-égalisation pour la suppression d'une erreur résiduelle.

**2.** Procédé selon la revendication 1, comprenant en outre les étapes suivantes :

- au niveau du récepteur (200) :

estimation du symbole transmis, $s$, à partir d'une information a posteriori de chaque décodeur (250) dans les chemins de décodage, et

fourniture dudit symbole transmis décodé, $\hat{s}$, à l'égaliseur (210).

3. Procédé selon l'une quelconque des revendications précédentes, dans lequel :

- au niveau de l'émetteur (100) :

la modulation d'ordre 2 est une modulation QAM.

4. Procédé selon l'une quelconque des revendications précédentes, comprenant en outre les étapes suivantes :

- au niveau de l'émetteur (100) :

entrelacement de chaque ensemble de bits codés dans chaque chemin de codage (110), et

- au niveau du récepteur (200) :

désentrelacement de chaque ensemble de bits codés dans chaque chemin de décodage.

5. Procédé selon la revendication 4, dans lequel :

- au niveau de l'émetteur (100) :

dans chaque chemin de codage (100), les bits d'information sont codés en différents ensembles de bits codés et les ensembles de bits codés sont entrelacés de manière différente.

6. Procédé selon l'une quelconque des revendications précédentes, comprenant en outre l'étape suivant :

- au niveau de l'émetteur (100) :

mappage des bits de chaque ensemble de bits codés sur des valeurs de bits antipodales.

7. Émetteur-récepteur multiniveau destiné à transmettre et à recevoir des données d'un système de communication, comprenant :

- d'un côté émetteur (100) :

une pluralité, $I...Q$, de chemins de codage (110), chaque chemin de codage mettant en oeuvre un niveau du code multiniveau et comprenant un codeur (140) destiné à coder un ensemble de bits d'information en un ensemble de bits codés, l'ensemble de bits codés formant une chaîne logique, une chaîne logique étant **caractérisée en ce qu'**une conjonction OU-Exclusif des éléments de la chaîne logique donne un zéro, et un mappeur (120) couplé en communication avec chacun des $Q$ chemins de codage (110), ledit mappeur étant adapté et configuré pour mapper un bit de chacun des chemins de codage (110) sur un symbole d'une modulation d'ordre 2, et

- d'un côté récepteur (200) :

un égaliseur (210) destiné à égaliser un symbole reçu, s,
un démappeur (230), couplé en communication avec l'égaliseur (210), destiné à démapper le symbole égalisé pour ainsi produire des bits codés des chemins de codage,
une pluralité $Q$ de chemins de décodage parallèles, chacun étant couplé en communication avec le démappeur (230) et chacun comprenant un décodeur (250) destiné à décoder les bits codés, et
un turbo-égaliseur comprenant un chemin de rétroaction comprenant un estimateur de canal (220), l'estimateur (220) étant couplé en communication avec l'égaliseur (210), le turbo-égaliseur étant adapté et configuré
pour estimer initialement une réponse impulsionnelle de canal au moyen d'une turbo-égalisation dans le but d'estimer des valeurs de prises de canal, $\hat{h}$, de la réponse impulsionnelle de canal à partir de l'exploitation de statistiques de chaînes logiques, et
pour affiner des valeurs de prises de canal, $\hat{h}$, de la réponse impulsionnelle de canal estimée, une sortie a posteriori de décodage et des valeurs de prises de canal d'une itération précédente, $\hat{\hat{h}}$, étant utilisées dans la turbo-égalisation pour la suppression d'une erreur résiduelle.

8. Émetteur-récepteur multiniveau selon la revendication 7, comprenant en outre :

- du côté récepteur (200) :

un mappeur couplé en communication avec chacun des chemins de décodage, et
un estimateur de symbole couplé en communication avec le mappeur, et
un entrelaceur, couplé en communication avec l'estimateur de symbole et l'estimateur de canal (220), destiné à fournir une sortie a posteriori de décodage à l'estimateur de canal (220) pour l'estimation du symbole transmis, s.

9. Émetteur-récepteur multiniveau selon l'une quelconque des revendications 7 à 8, dans lequel :

- du côté émetteur (100) :

la modulation d'ordre 2 est une modulation QAM.

10. Émetteur-récepteur multiniveau selon l'une quelconque des revendications 7 à 9, dans lequel :

- du côté émetteur (100) :

les codeurs (140) sont configurés et adaptés pour coder des bits d'information en différents ensembles de bits codés.

11. Émetteur-récepteur multiniveau selon l'une quelconque des revendications 7 à 10, dans lequel :

- du côté émetteur (100) :

chaque chemin de codage comprend un entrelaceur (150), et

- du côté récepteur (200) :

chacun des chemins de décodage comprend un désentrelaceur (240).

12. Émetteur-récepteur multiniveau selon la revendication 11, dans lequel :

- du côté émetteur (100) :

chaque chemin de codage comprend un mappeur antipodal (160).

Fig. 1

Fig. 2

Fig. 3

Fig. 4

EP 2 223 483 B1

Fig. 5a

Fig. 5b

## REFERENCES CITED IN THE DESCRIPTION

**Non-patent literature cited in the description**

- **SCHERB.** *On Phase Correct Blind Deconvolution exploiting Channel Coding*
- **A. SCHERB, VOLKER KÜHN ; K.-D. KAMMEYER.** On Phase Correct Blind Deconvolution exploiting Channel Coding. *IEEE International Symposium on Signal Processing and Information Technology,* 2003

- **W. RAVE ; A. F. DOS SANTOS ; G. FETTWEIS.** Statistics of a Blind Channel Estimator based on 'Logic Strings. *7th International ITG Conference on Source and Channel Coding (SCC08)*